# EUROPEAN PATENT APPLICATION

(11) **EP 1 263 204 A2**
(43) Date of publication of application: **04.12.2002**
(21) Application number: 02010159.8
(22) Date of filing: 14.05.2002
(51) Int. Cl.: H04M 19/00

(54) **Distinctive call notification service in a multimedia-capable network**

(30) Priority: 31.05.2001 US 871079
(71) Applicant: ALCATEL, 75008 Paris (FR)
(72) Inventor: Mani, Babu V., Plano, TX 75025 (US)
(74) Representative: Dreiss, Fuhlendorf, Steimle & Becker

(57) **Abstract**

A distinctive call notification system and method for use in a multimedia-capable network for delivering a select alert to a subscriber with respect to an incoming call from a calling party. Upon receiving the incoming call from the calling party at a network element serving the subscriber, a multimedia session engine is invoked to launch a call treatment application for the subscriber. Based on at least a portion of the parametric information relating to the incoming call, a call notification database is queried to determine applicable service options and preferences. Based thereon, an intelligent multimedia application determines a particular call alert/notification mode to be provided. A multimedia-capable interface operable with the subscriber terminal is actuated thereafter in order to effectuate the selected call alert mode with respect to the incoming call.

## Description

### BACKGROUND OF THE INVENTION

### Technical Field of the Invention

The present invention generally relates to telecommunication and data communication services. More particularly, and not by way of any limitation, the present invention is directed to a customizable distinctive call notification service in a multimedia-capable next-generation network.

### Description of Related Art

Over the last two decades or so, telecommunication services have evolved rapidly from simple telephone calls and fax communications to a host of advanced services such as multi-party conferences, voice mail, call forwarding, caller ID, call waiting, et cetera. This rapid evolution has been made possible primarily due to the successful deployment of the Intelligent Network (IN) and Advanced IN (AIN) architecture using Signaling System No. 7 (SS7) as the out-of-band signaling protocol infrastructure. Similarly, data services have also followed a significant transformation from basic text messaging in the 1980s to the World Wide Web and Internet of today, where transporting diverse media has become commonplace. For example, bandwidth-intensive services such as desktop video conferencing, video on demand, telemedicine, realtime audio, and many other applications are driving the demand for simultaneous support of different types of services on the same public network.

Coupled with the phenomenal popularity of the Internet, recently there has been a tremendous interest in using the packet-switched network (PSN) infrastructure employed in the data networks (e.g., those based on Internet Protocol (IP) addressing) as a replacement for, and/or as an adjunct to, the existing circuit-switched network (CSN) infrastructure deployed in today's voice networks. Several advantages are expected to be realized due to such integration. From network operators' viewpoint, the inherent traffic aggregation in PSN allows for a reduction in the cost of transmission and the infrastructure cost per end-user. Ultimately, such cost reductions enable the network operators to pass on the savings to subscribers or, more generally, users. Also, operators of a new breed of service-centric networks (referred to as next-generation networks, distinct from the existing voice-centric and data-centric networks) can offer enhanced services with integrated voice/data/video to users who will be using endpoints of diverse multimedia capabilities.

As alluded to hereinabove, several advances have taken place in both data and voice services. However, the current data-centric and voice-centric services do not provide the gamut of enhancements that are possible with the use of multimedia capabilities in a next-generation network.

### SUMMARY OF THE INVENTION

Accordingly, the present invention advantageously provides an enhanced distinctive call notification service in a multimedia-capable network wherein a select call alert mode is effectuated with respect to an incoming call in one or more multiple formats, including pictures, special tones, special ringing, announcements, banners, pop-up windows, and the like. Preferably, the multimedia-capable network is provisioned as a next-generation network having a decoupled service architecture that is facilitated by the use of multimedia softswitch technology.

In one aspect, the present invention is directed to a call notification system and method for use in a multimedia-capable network for delivering a select alert to a subscriber with respect to an incoming call from a calling party. Upon receiving the incoming call from the calling party at a network element serving the subscriber, a multimedia session engine is invoked to launch a call treatment application for the subscriber. Based on at least a portion of the parametric information relating to the incoming call, a call notification database is queried by service logic associated with the call treatment application to determine the call alert mode to be provided. A multimedia-capable interface operable with the subscriber terminal is actuated thereafter in order to effectuate the selected call alert mode with respect to the incoming call.

Depending on how the service architecture is implemented, the call treatment application may be provisioned as a service application hosted on a third-party server platform coupled to a public packet-switched network (e.g., the Internet), as a telecom-hardened, carrier-class service application hosted on dedicated IN/AIN-compliant nodes such as multimedia Service Control Points (SCPs) and application servers, or as a centralized service with service logic embedded in SS7 nodes (e.g., Service Switching Points or SSPs) and multimedia softswtich elements.

In another aspect, the present invention is directed to a computer-accessible medium operable with at least a network element disposed in a multimedia-capable next-generation network. The computer-accessible medium is further operable to carry a sequence of instructions which, when executed by at least one processing entity associated with the network, cause to be performed at least a portion of the steps of the multimedia-capable distinctive call notification method set forth hereinabove.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary high-level architectural scheme of a next-generation, multimedia-capable network employed for practicing the teachings of the present invention;

FIG. 2 depicts a functional block diagram associated with the exemplary high-level architectural scheme shown in FIG. 1;

FIG. 3 depicts a functional block diagram of a multimedia call/session engine operable in accordance with the teachings of the present invention;

FIG. 4 depicts an exemplary next-generation network capable of multimedia services;

FIG. 5 depicts an exemplary service network which employs a multimedia-based distinctive call notification system and method in accordance with the teachings of the present invention;

FIG. 6 depicts an exemplary multimedia interface with browser navigation for effectuating multimedia calls and distinctive call notification alerts in accordance with the teachings of the present invention;

FIG. 7 depicts an exemplary embodiment of a subscriber's call notification profile;

FIG. 8 is a flow chart of the steps involved in an exemplary distinctive call notification method of the present invention; and

FIGS. 9A and 9B depict the steps involved in a select exemplary distinctive call notification scenario in accordance with the teachings of the present invention.

### DETAILED DESCRIPTION OF THE DRAWINGS

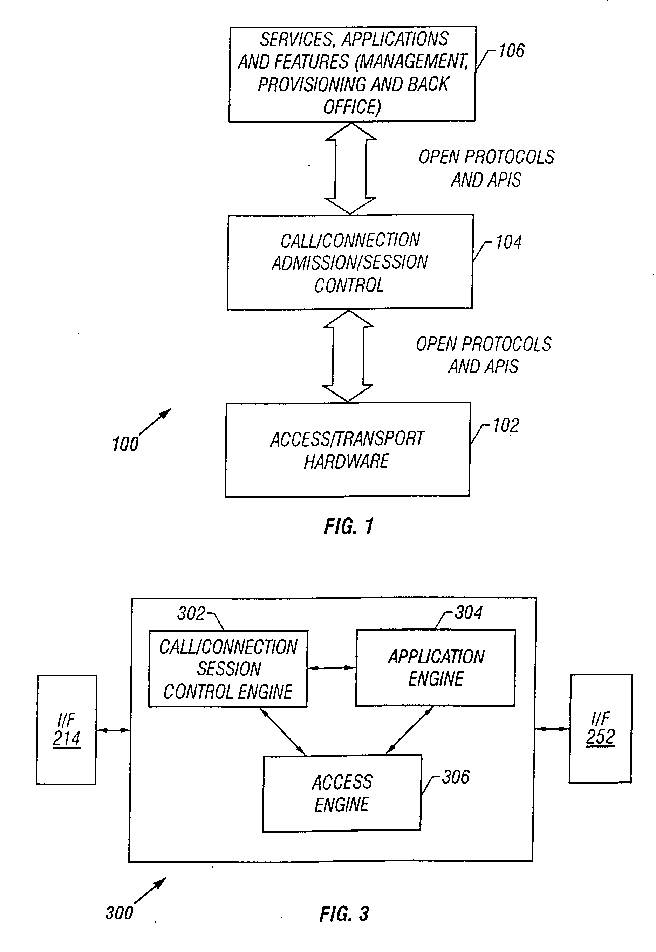

In the drawings, like or similar elements are designated with identical reference numerals throughout the several views thereof, and the various elements depicted are not necessarily drawn to scale. Referring now to FIG. 1, depicted therein is an exemplary high-level architectural scheme 100 of a next-generation network that is capable of effectuating multimedia communications. In the context of the present patent application, the term "multimedia" broadly refers to visual information, aural information, and other information. Visual information is generally divided into two categories: (i) still pictures and graphics, and (ii) full-motion video or animation. Aural information includes both speech and non-speech categories. Other information categories can include text, computer data, etc. Multimedia communication involves, accordingly, integrated presentation of text, graphics, video, animation, sound, and the like, using different media and multiple information elements in a single application or session.

The exemplary architectural scheme 100 of the next-generation network is preferably effectuated by implementing what is known as softswitch technology. Essentially, the softswitch functionality is operable to separate the call control functions of a call (or, "session control" functions in the context of a multimedia communication session) from the media gateways (i.e., transport layer(s)) that carry it. Call control features can vary, but call routing, admission control, connection control (such as creating and tearing down sessions), and signaling interworking -- such as from SS7 to Session Initiation Protocol (SIP) -- are usually included. These functionalities may collectively be referred to as session control. The softswitch functionality can also include: (i) the ability to route a call based on customer database information, (ii) the ability to transfer control of the call to a node disposed in another network, and (iii) support of management functions such as provisioning, billing, etc.

Continuing to refer to FIG. 1, the architectural scheme 100 accordingly includes an access/transport level 102 which interacts with a session control level 104 via a plurality of open-standard protocols and application programming interfaces (APIs). The session control level 104 is operable, in turn, to interface with an application services/features level 106 via a second set of open-standard protocols and APIs. As will be described in greater detail hereinbelow, various multimedia services, applications, and features may be provided as part of this services level 106. Also, some of the back office management and provisioning functionality can be included herewith.

Those skilled in the art should readily appreciate that several protocols and APIs are available for effectuating the architectural scheme 100 set forth hereinabove, which effectively decouples the session control layer from the underlying access/transport layer as well as the service application layer. For example, these protocols -- which effectuate media control APIs, signaling APIs, and service APIs -- include: SIP, H.323, Call Processing Language (CPL), Media Gateway Controller Protocol (MGCP), Internet Protocol Device Control (IPDC), H.248, MEGACO, Real-Time Protocol (RTP), Java™ APIs for Integrated Networks (JAIN), Resource Reservation Protocol (RSVP), Parlay, Lightweight Directory Access Protocol (LDAP), Markup Languages such as Extensible Markup Language (XML), Multi Protocol Label Switching (MPLS), and the like. Additionally, access to the existing IN/AIN service architecture is also available via suitable SS7 or IP-based interfaces.

The softswitch functionality is realized essentially as a software implementation that can reside on a single network element, or be distributed across multiple nodes. Also, different levels of decoupling and interfacing may be provided in an actual softswitch implementation. For example, SS7 functionality may be embedded within a softswitch element or kept separate. In other implementations, the softswitch functionality may sit on top of a media gateway (MGW), instead of being physically distinct, as long as transport and control planes are decoupled.

By creating separate planes for control and switching and leveraging software's programmability, service providers can combine transport services and control protocols freely in order to facilitate seamless migration from one service to another. Best-in-class solutions and products from multiple vendors can be advantageously deployed in the next-generation network because of open standards and APIs. Further, open APIs to the service layer (including a suitable service creation environment (SCE)), along with service creation, service mediation and service brokering standards, enable creation of numerous advanced, multimedia-enhanced services with faster service rollout.

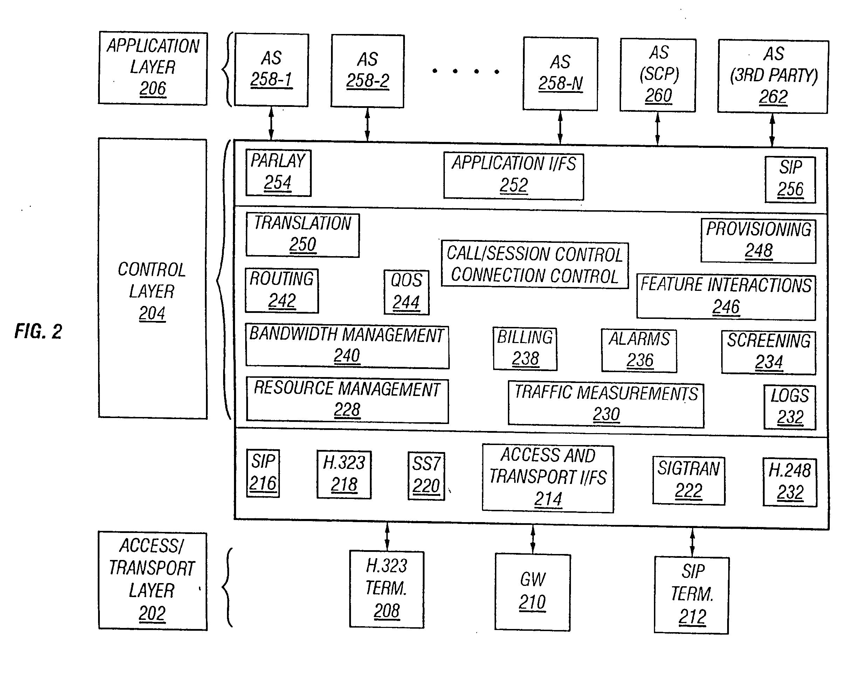

FIG. 2 depicts a functional block diagram associated with the exemplary architectural scheme shown in FIG. 1. Three layers corresponding to the three decoupled levels of the architectural scheme are particularly illustrated. An access/transport layer 202 is exemplified with a plurality of multimedia-capable H.323 terminals 208, GWs 210 (including MGWs and Access Gateways or AGWs) for providing access to one or more Integrated Access Devices (IADs) (not shown) and other communication appliances, and multimedia-capable SIP terminals 212. For purposes of the present invention, all such multimedia-capable access devices (including multimedia-capable phones, computers, game stations, television sets, etc.) may be referred to as multimedia appliances and are preferably provided with one or more man/machine interfaces (e.g., video/still cameras, microphones, display screens, keyboards, pointing devices, joy sticks, track balls, voice recorders, audio-to-text or text-to-audio converters, and the like) for accepting or capturing multimedia responses or inputs associated with a user. Also, in some exemplary implementations, the multimedia appliances may be equipped with suitable biometric ID readers and sensors, e.g., fingerprint readers, retinal scanners, voice recognition systems, etc.

Continuing to refer to FIG. 2, control layer 204 of the decoupled architectural scheme illustrates the functionality of an exemplary multimedia call/session engine implemented as part of a multimedia softswitch in a network. A call/session and connection control block 226 is provided with a plurality of access and transport interfaces 214 to couple to the underlying access/transport layer 202. As alluded to hereinabove, these interfaces include, e.g., SIP interfaces 216, H.323 interfaces 218, SS7 interfaces 220, SigTran interfaces 222 (for SS7-over-IP) and H.248 interfaces 224. The functionality of the call/session and connection control block 226 is associated with a plurality of modules such as, for instance, a resource management module 228, a traffic metering/measurement module 230, an event log module 232, a screening module 234, alarms 236, a billing module 238, a bandwidth management module 240, a routing module 242, a Quality of Service (QoS) module 244, feature interactions module 246, a provisioning module 248, and a translation module 250.

A plurality of application interfaces 252 are available to the multimedia session engine for interacting with an application layer 206. A Parlay interface 254 and a SIP interface 256 are exemplified herein. Reference numerals 258-1 through 258-N refer to a plurality of application servers (ASs) that are operable to host various services, features and management policies. One or more legacy service nodes (e.g., a Service Control Point or SCP) may also be provided as part of the application layer 206 in the form of one or several AS nodes, e.g., AS 260. Preferably, interfaces to third-party AS nodes 262 are also included.

Application layering in the decoupled architectural scheme can be architected in three ways. Custom applications such as e-commerce, e-business, e-residence (home appliance control, residential security, etc.), e-health, and the like, may reside on the Internet as applications hosted on third-party platforms. Specialized services such as Virtual Private Networks (VPNs), prepaid services, etc., and multimedia applications for business and residential use may be provided as distributed applications hosted on dedicated telecom-hardened platforms. Carrier-class AS nodes, multimedia-capable SCPs, etc. typically comprise such platforms. A select group of legacy service offerings, for commercial as well as residential applications, may be provided as centralized applications that are based on SS7 platforms (such as signal switching points (SSPs)) and softswitch nodes.

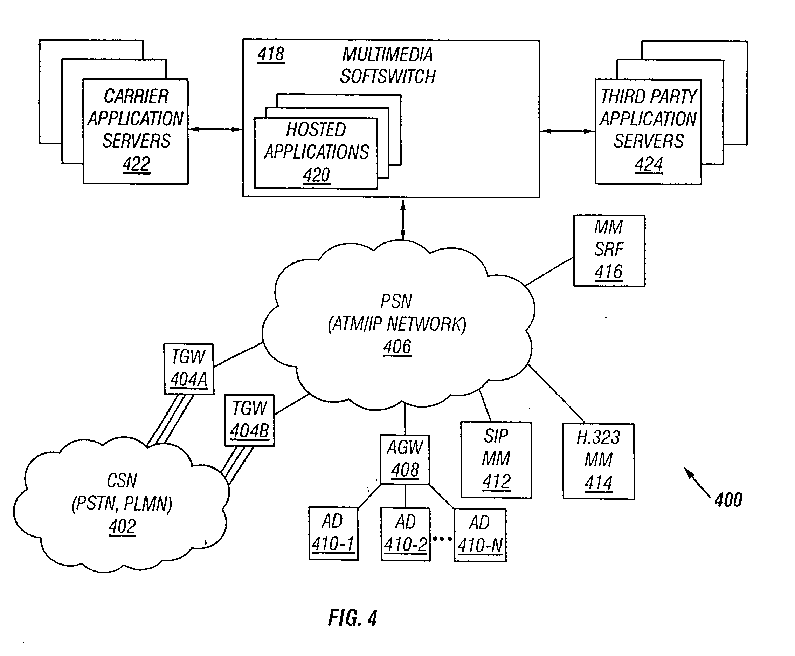

Referring now to FIG. 3, depicted therein is a high-level functional block diagram of a call/session engine 300 of a multimedia softswitch operable in accordance with the teachings of the present invention. As described in detail hereinabove, both access/transport interfaces 214 and application layer interfaces 252 are available to the call/session engine 300 for effectuating its softswitch functionality. A control engine 302 is responsible for call/session control and connection control (analogous to the traditional call control function or CCF). An application engine 304 is included for application triggering and managing feature/policy interaction with respect to a triggered service application. In addition, the application engine 304 is preferably operable to open suitable APIs for supporting enhanced services. When third-party applications are invoked, the application engine 304 may also provide firewall management and subscriber access management for service selection and initiation. An access engine 306 is operable to effectuate online user authentication and authorization and validate service usage rights. Also, roaming management may be provided by the access engine 306 for subscription retrieval, roaming retrieval and registration negotiation.

FIG. 4 depicts an exemplary next-generation multimedia network 400 that is capable of providing a plurality of multimedia services in accordance with the teachings of the present invention. For purposes of the present invention, network 400 and its variants and exemplary implementations will be referred to as a "service network." One or more legacy circuit-switched networks (CSNs) 402 such as the Public Switched Telephone Network (PSTN) for wireline telephony and the Public Land Mobile Network (PLMN) for wireless telephony are coupled to one or more packet-switched networks (PSNs) 406 such as the IP-based Internet, ATM-based packet network, etc. Further, the PSN portion 406 may also encompass such other private IP-based networks as, e.g., corporate intranets, enterprise networks, home networks, and the like. Accordingly, in one embodiment, PSN 406 represents an inter-networking network of a combination of such IP networks. A plurality of Trunk Gateways (TGWs), e.g., TGW 404A and TGW 404B, are disposed between the CSN and PSN portions of the network 400 for effectuating the interfacing therebetween. An Access Gateway (AGW) node 408 is coupled to the PSN portion 406 for facilitating access to the network from a plurality of access devices (ADs) 410-1 through 410-N. One or more multimedia-capable SIP terminals 412 and multimedia-capable H.323 terminals 414 are operable to originate and terminate multimedia sessions in conjunction with various multimedia services supported by the network 400.

One or more optional multimedia (MM) Service Resource Function (SRF) nodes, e.g., MM-SRF 416, are coupled to PSN 400 for providing bearer resource functionality for converged voice/data services, protocols to request these services, and open APIs for programming bearer-resource-intensive applications as well as content/announcement files. The MM-SRF node 416 does not set up a bearer path between two parties, however, as there is no such dedicated bearer connection in the context of IP networking. Rather, only a logical connection is established between the parties.

Within the multimedia-based service network framework, some of the functions of the MM-SRF node 416 include the following: (i) operating in the media access/resources plane for bearer services by providing multimedia resource services, (ii) providing standard protocols, (iii) interfacing to AS nodes through a multimedia softswitch (e.g., softswitch 418), and (iv) enabling third-party programmability of bearer services and content/announcements through the open APIs. Those skilled in the art should appreciate that some of these functionalities may be embedded within the multimedia softswitch 418 or be distributed across several MM-capable nodes depending on the integration level of the softswitch.

A plurality of hosted applications 420 are colocated at the multimedia softswitch node 418. The specific type of the applications is dependent on the service architecture implementation and application layering. Some of the exemplary applications may include network announcements (in conjunction with SRF 416), video conferencing, digit collection, unified (multimedia) messaging, media streaming and custom announcements, automatic speech recognition (ASR), text-to-speech (TTS), user verification using multimedia, and various enhanced services such as multimedia call waiting, direct connect services, distinctive call notification, emergency override service, presentation of call party profiles based on multimedia, etc. It should be recognized, in addition, that some of these multimedia services may be provisioned as applications hosted on carrier AS nodes 422 and third-party AS nodes 424, with suitable APIs associated therewith, respectively.

Although the exemplary network embodiment 400 shown in FIG. 4 does not explicitly illustrate SS7 interfaces for effectuating legacy IN/AIN services, those skilled in the art should appreciate that various such SS7 interfaces and SS7-capable signaling gateways (SGWs) may also be appropriately disposed in the network for providing SS7 functionality.

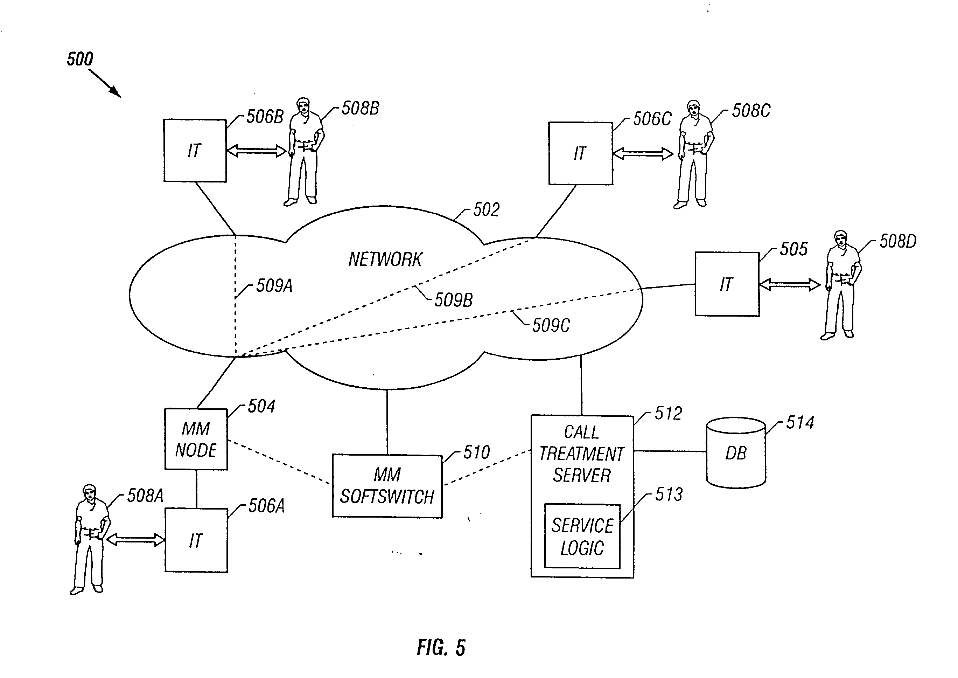

Referring now to FIG. 5, depicted therein is an exemplary service network arrangement 500 which employs a distinctive call notification system and method in a multimedia-capable next-generation network 502 in accordance with the teachings of the present invention. It should be appreciated by those skilled in the art upon reference hereto that in one embodiment, the network 502 may be comprised of a combination of various PSN and CSN portions and their hybrids, including local and intercarrier network portions. A multimedia node or network element 504 is operable to serve a plurality of subscribers, e.g., subscriber 508A operating a multimedia IT device 506A for originating and/or terminating calls. Similarly, other call parties operating suitable ITs, e.g., call party 508B with IT 506B and call party 508C with IT 506C, are also operably coupled to the network 502.

A softswitch 510 having the multimedia call/session engine functionality as described hereinabove is disposed in the network 502 for call routing and application triggering. Although the softswitch 510 is illustrated as a separate node in this embodiment, it should be recognized that the softswitch functionality may also be provided as part of the serving multimedia node 504. A call treatment server 512 is provided as an application server node coupled to the network 502, wherein suitable multimedia service logic 513 is provided for querying a subscriber call notification profile database. Again, as alluded to hereinabove, it should be apparent that the functionality of the call treatment server node 512 may be distributed or embedded, depending upon the service architecture and application layering.

Continuing to refer to FIG. 5, the distinctive call notification system of the present invention includes a database environment 514 associated with the call treatment server node 512 via a suitable interface. Various distinctive call notification modes, options, restrictions and policies, other related features such as selective call treatment options, and the like are stored in the database environment 514. In a presently preferred exemplary embodiment of the present invention, the database environment 514 is capable of being updated by the subscribers as well as the network operator.

Reference numeral 509A refers to a call connection in the network 502 between subscriber 508A being served by the multimedia network element 504 and a calling party 508B. In similar fashion, reference numeral 509B refers to another call connection between subscriber 508A and another calling party 508C. Reference numeral 509C refers to yet another call connection between subscriber 508A and a non-subscriber calling party 508D. It should be appreciated that some of the terminals operated by the parties, e.g., terminal 505 operated by the party 508D, may not be multimedia-compatible. Further, the calling parties may be located in different geographic areas and can comprise several types, e.g., family members, business acquaintances, et cetera. Accordingly, numerous call notification scenarios may be had with respect to the incoming calls to the subscriber 508A depending on the subscriber's notification profile options and related service features.

Moreover, in some exemplary embodiments, the parties may also have additional service features such as, for example, multiple call waiting (i.e., the capability to wait on multiple incoming calls) and call party profile presentation, that can interact with the call notification service features of the present invention. Additional information regarding these multimedia-based services is provided in the following co-pending U.S. patent applications which have been cross-referenced and incorporated by reference hereinabove: (i) "Call Party Profile Presentation Service In A Multimedia-Capable Network," filed , Ser. No.: (Attorney Docket Number 1285-0048US), in the name(s) of: Babu V. Mani; and (ii) "Call Waiting Service In A Multimedia-Capable Network," filed , Ser. No.: (Attorney Docket Number 1285-0043US), in the name(s) of: Babu V. Mani.

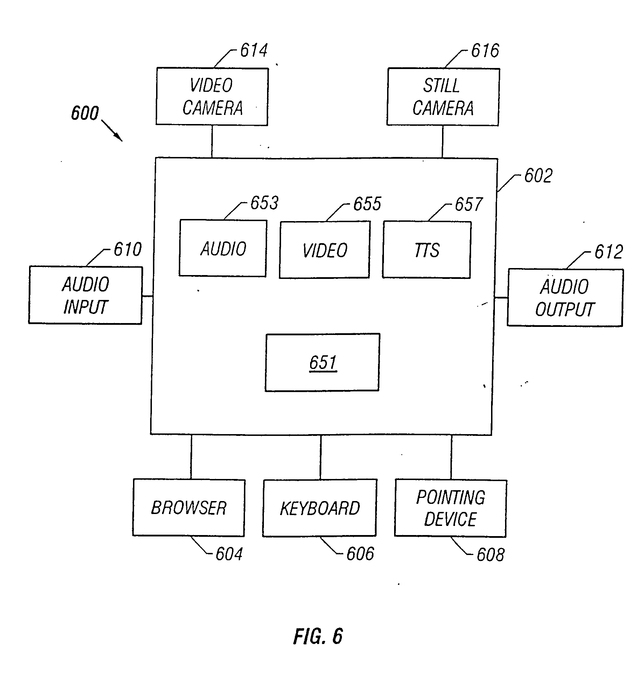

FIG. 6 depicts an exemplary multimedia interface 600 with browser navigation capability that is operable with multimedia-capable terminals for effectuating multimedia calls and distinctive call notification alerts in accordance with the teachings of the present invention. A display 602 is operable to present a graphic user interface (GUI) with a plurality of call-oriented icons which can be activated via drag-and-drop interaction under the control of a browser client 604 running on a multimedia terminal, e.g., IT 506A depicted in FIG. 5. At least a portion (e.g, portion 651) of the display 602 may be utilized for presenting video/photo indicia of the calling party to the subscriber. Additionally, the portion 651 or other display portions may be utilized for presenting call notification pop-up windows, banners, etc. associated with particular callers, as will be described in greater detail hereinbelow. A keyboard or keypad 606 and a cursor pointing device 608 (such as, e.g., a mouse or trackball, and their equivalents) are provided for facilitating the drag-and-drop interaction between the subscriber and the interface. Suitable audio input devices 610 and audio output devices 612 are associated with the interface 600 for effectuating live speech responses and/or call notification announcements. A digital video camera 614 and a still camera 616 are also included for capturing live video and still photographs of the subscriber in order to provide live images as multimedia responses to a call party engaged in a session with the subscriber.

If call waiting (CW) notification features are available to the subscriber, a plurality of waiting callers may be presented on the display 602 as suitable "icons" (not shown in this FIG.). It should be recognized that these icons may comprise audio clip icons, image icons, animation graphics, flashing text messages, et cetera, associated with the waiting callers. Further, the display 602 can include additional icons relating to selected call party profile presentation modes if the subscriber has such service capabilities.

The exemplary multimedia interface 600 also includes a plurality of call modes for effectuating different types of multimedia calls between the subscriber and other parties. An Audio icon 653 is operable to indicate a voice-only mode. Similarly, a Video icon 655 indicates a video-capable call mode that includes audio. A TTS icon 657 is operable, when activated, to convert text messages to speech and vice versa. In addition, icons relating to selective call diversion, call transfer, call rejection, and call acceptance may also be provided so as to enable the subscriber to select different call treatments and/or to divert an incoming call to a voice mail box, answering service, or a different terminal, etc.

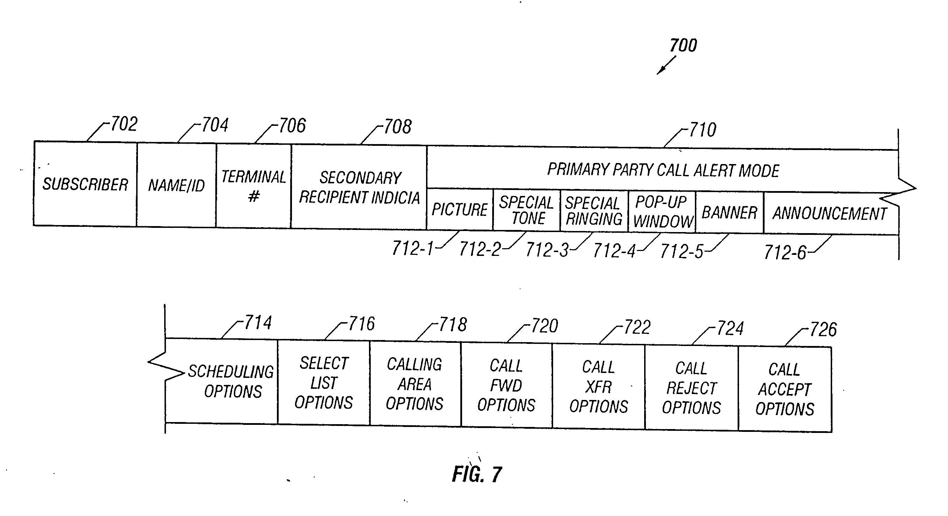

Referring now to FIG. 7, depicted therein is an exemplary embodiment of a call notification profile 700 for a subscriber 702 operable with respect to the distinctive call notification service of the present invention. It should be apparent that in addition to the subscriber profiles such as the call notification profile 700, the database environment 514 (shown in FIG. 5) may also be populated with further service features, options and policies relating to other multimedia-enhanced services, e.g., call party profile presentation, multiple call waiting, and the like. In addition, whereas a single subscriber's profile record is exemplified herein, those skilled in the art will recognize that the applicable database environment is typically comprised of numerous such records operable with respect to a plurality of subscribers.

Preferably, the subscriber 702 may be identified as the primary party associated with a terminal/station by way of a name or other ID 704. A terminal ID 706 (e.g., directory number, email ID, an Internet address such as a URL, and the like) is included to identify the terminal/station associated with the subscriber. Where secondary recipient parties are identified with the primary subscriber 702 and/or the terminal associated therewith, one or more secondary recipient indicia 708 such as, e.g., secondary directory numbers operable to identify particular family members, may be appropriately included in the subscriber's profile record 700.

Continuing to refer to FIG. 7, in accordance with the teachings of the present invention, a call alert mode 710 is also specified for the primary subscriber party. The call alert mode 710 is preferably comprised of numerous call notification options and features, wherein the subscriber is capable of selecting one or more call notification schemes for effectuating an alert with respect to an incoming call at the terminal. Exemplary call notification options include: pictures 712-1, special tones 712-2, special ringing 712-3, graphic windows such as pop-up screens 712-4 and stationary or scrollable banners 712-5, announcements 712-6, and the like. Multiple interactions may be provided between the exemplary call notification options and other service options such as scheduling options 714 which may include, e.g, time-of-day delivery policies and restrictions. The call alert mode options may also be customized with respect to select caller list options 716, wherein specific call notifications may be assigned with respect to calls originating from parties that belong to various subscriber-maintained calling party lists, either individually or on a group-basis, e.g., family members, relatives, business acquaintances, professional associations and memberships, "buddy" lists, VIP lists, and so on.

The exemplary subscriber profile record 700 may also be provided with geographic calling area options 718 for providing additional feature interactions with respect to the call notification options described above. Depending upon whether an incoming call is local, long distance or international, for example, different call notification options may be selected.

In addition, several related call treatment options providing certain terminating services may also be included in the exemplary subscriber profile record 700. By way of illustration only, selective call forwarding options 720 are operable to forward an incoming call based on a particular notification scheme effectuated for the primary subscriber party. In similar fashion, selective call transfer options 722 are operable to transfer calls depending on information contained in the call notification messages. Selective call reject options 724 and accept options 726 are operable to reject or accept incoming calls based on notification information.

Those skilled in the art should realize upon reference hereto that the direct connect service profile 700 described herein is illustrative only. Accordingly, both the contents and specific implementation of a subscriber profile database may vary depending upon the objectives of a particular application. It should therefore be recognized that the scope of the present invention is not circumscribed by the specifics of a subscriber profile database in any manner.

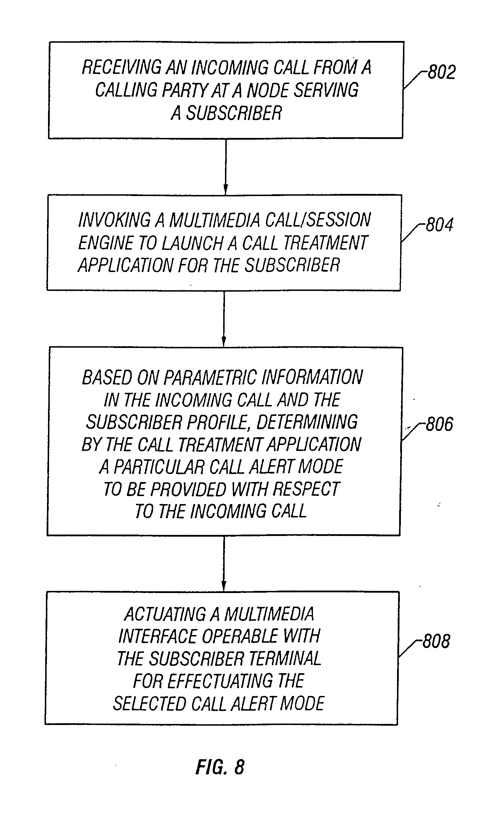

As alluded to hereinabove, numerous call scenarios are possible within the context of a call notification profile because of the various combinations resulting from the service features of the subscribers, terminal capabilities and the interactive options described hereinabove. FIG. 8 is a flow chart of the steps involved in an exemplary high level call notification scheme of the present invention. Upon receiving an incoming call from a calling party at a node serving the subscriber (step 802), a multimedia call session engine is invoked by the serving network node disposed in a service network structure (such as, e.g., service network arrangement 500 depicted in FIG. 5) to launch a call treatment application with respect to the incoming call (step 804). The incoming call preferably includes parametric information comprised of, for example, the terminating address (e.g., directory number, email ID, URL, etc.), originating address (e.g., directory number, email ID, URL, etc.), and the like. In some embodiments, the parametric information may also include one or more indicia to identify specific secondary recipient parties associated with the primary subscriber. The call treatment application's service logic is operable to query the subscriber profile database and, based on the parametric information in the incoming call and the results obtained from the database query, a particular call alert to be provided to the subscriber is determined by an intelligent MM-capable call treatment application (step 806). As should be appreciated by those skilled in the art, various subscriber preferences stored in the service profile database interact with the process of determining the notification method. Some of preferences point to information collected during call setup, such as, for example, information included in calling party profile, calling party MM capabilities, dialed number or address, whether the call is a re-directed call from another location, whether the call is a forwarded call from another location, whether the call is a priority call, or whether the call has passed screening (including, for instance, selective call acceptance, selective call rejection, time dependency, et cetera). After the notification determination process, a multimedia interface operable with the subscriber terminal is actuated appropriately in order to effectuate the selected call alert option (step 808).

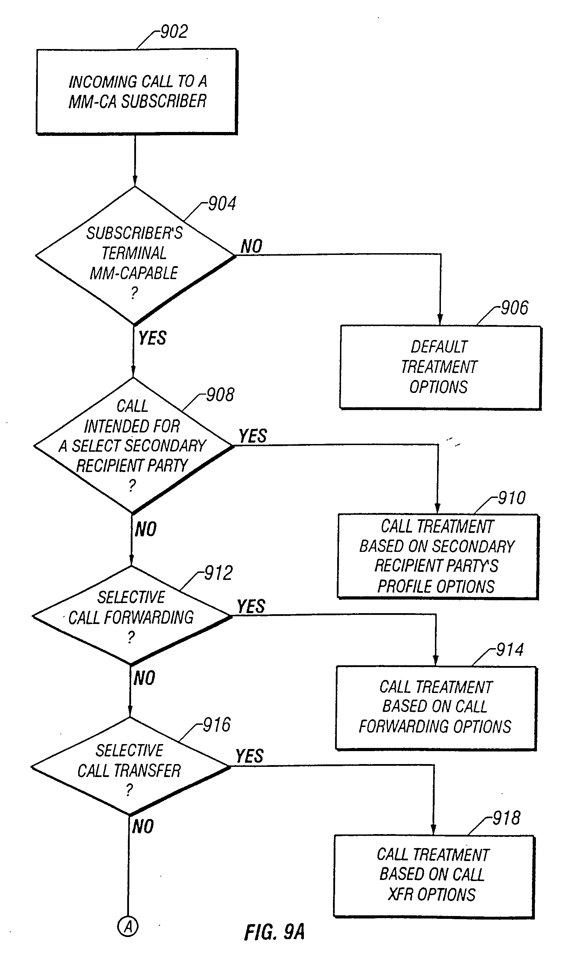

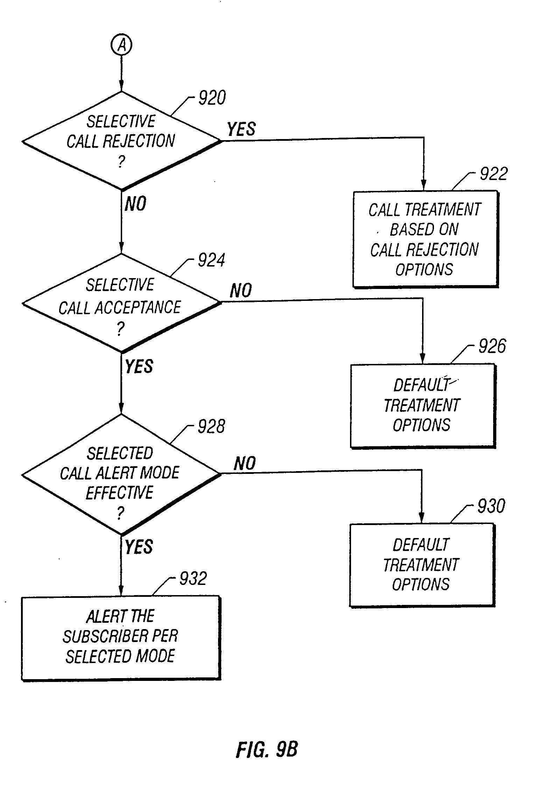

FIGS. 9A and 9B depict the steps involved in a select exemplary call notification scenario in accordance with the teachings of the present invention, wherein illustrative samples of certain terminating services are included. Upon receiving an incoming call with respect to a called party who is a subscriber of the multimedia-based distinctive call alert (CA) notification service (MM-CA service) (step 902), an appropriate call treatment application is launched by the multimedia session engine. If the called party's terminal is not multimedia-capable (decision block 904), a default treatment may be available (step 906), wherein a non-multimedia call notification (e.g., limited audio-only alerts) may be presented to the subscriber. Another determination is made as to whether the incoming call is intended for a select secondary recipient party (decision block 908). If so, a predetermined call treatment may be provided with respect to the secondary recipient party (step 910), which may involve effectuating a particular notification option. Further, the call treatment with respect to the secondary recipient party may also be based on applicable secondary recipient party service profiles, if available.

If the incoming call is not intended for a select secondary recipient, further call treatment queries may be made with respect to the primary subscriber. A determination is made whether selective call forwarding options are applicable with respect to the incoming call (decision block 912). If so, appropriate call forwarding treatment is accorded thereby (step 914). Similarly, a selective call transfer determination (decision block 916) and selective call rejection determination (decision block 920) are made. Responsive thereto, suitable call treatment options (steps 918 and 922, respectively) are effectuated. If the call is selectively accepted (decision block 924), a further determination is made whether a selected call alert notification option is effective (decision block 928). If so, the multimedia interface operable with the subscriber's terminal is appropriately actuated to provide the selected alert mode with respect to the incoming call in accordance with the MM-CA service of the present invention described hereinabove (step 932). Certain default treatment options may apply (steps 926 and 930, respectively) when the call is not accepted or when the selected call alert mode is not available due, for example, to interaction with scheduling restrictions, etc.

Based upon the foregoing Detailed Description, it should be readily apparent that the present invention advantageously provides an enhanced call notification service using multimedia within the context of a next-generation network. By architecting the service as part of a decoupled application layer with open protocols and APIs, not only can service interoperability with different network elements and platforms be ensured, but service rollout can be streamlined as well for faster delivery. Furthermore, the distinctive call notification service of the present invention provides several advancements and improvements over the conventional schemes. For example, because call notification modes can be customized based on a host of features and options (e.g., select calling party lists, calling area options, secondary recipients, etc.), it is possible for the subscriber to know where the call is from and the type of call (i.e., audio, video, and the like) before answering the call. Accordingly, the likelihood of having to deal with potential nuisance calls is significantly reduced in the practice of the present invention.

By specifying the various call alert modes in accordance with the teachings hereof, the subscriber is able to obtain a more enriched call notification experience than the conventional audio-only schemes. Moreover, the call notification service of the present invention provides a significant improvement over the existing "Teen Service" (or, "Secondary Directory Number Service"), which is limited to a small number of additional phone numbers to identify secondary recipients. In addition, numerous enhanced service features such as selective call treatments based on selected notification modes may also be implemented advantageously.

It is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims.

## Claims

1. A call notification method for use in a multimedia-capable network, comprising the steps:
upon receiving an incoming call from a calling party at a node serving a subscriber, invoking a multimedia session engine to launch a call treatment application for said subscriber;
based on at least a portion of parametric information relating to said incoming call, querying a call notification profile associated with said subscriber;
responsive to said step of querying, determining by said call treatment application a particular call alert mode to be provided with respect to said incoming call; and
actuating at least a portion of a multimedia interface operable with said subscriber's terminal for effectuating said particular call alert mode.

2. The call notification method for use in a multimedia-capable network as set forth in claim 1, wherein said particular call alert mode comprises providing a special tone.

3. The call notification method for use in a multimedia-capable network as set forth in claim 1, wherein said particular call alert mode comprises providing a special ringing.

4. The call notification method for use in a multimedia-capable network as set forth in claim 1, wherein said particular call alert mode comprises providing an announcement.

5. The call notification method for use in a multimedia-capable network as set forth in claim 1, wherein said particular call alert mode comprises providing a banner on a display screen associated with said multimedia interface.

6. The call notification method for use in a multimedia-capable network as set forth in claim 1, wherein said particular call alert mode comprises providing a pop-up window on a display screen associated with said multimedia interface.

7. The call notification method for use in a multimedia-capable network as set forth in claim 1, wherein said particular call alert mode comprises providing a graphic image on a display screen associated with said multimedia interface.

8. The call notification method for use in a multimedia-capable network as set forth in claim 1, wherein said particular call alert mode is operable to categorize said incoming call based on identifying a specific recipient party.

9. The call notification method for use in a multimedia-capable network as set forth in claim 8, wherein said specific recipient party comprises a secondary subscriber party associated with said subscriber.

10. The call notification method for use in a multimedia-capable network as set forth in claim 1, wherein said particular call alert mode is operable to categorize said incoming call based on an originating address associated with said calling party.

11. The call notification method for use in a multimedia-capable network as set forth in claim 10, wherein said particular call alert mode is operable to categorize said incoming call based on whether said originating address belongs to a select calling party list specified for the subscriber.

12. The call notification method for use in a multimedia-capable network as set forth in claim 1, further comprising the step of determining by said call treatment application whether said incoming call is to be selectively forwarded to another destination based on at least a portion of said parametric information associated therewith.

13. The call notification method for use in a multimedia-capable network as set forth in claim 1, further comprising the step of determining by said call treatment application whether said incoming call is to be selectively accepted based on at least a portion of said parametric information associated therewith.

14. The call notification method for use in a multimedia-capable network as set forth in claim 1, further comprising the step of determining by said call treatment application whether said incoming call is to be selectively rejected based on at least a portion of said parametric information associated therewith.

15. The call notification method for use in a multimedia-capable network as set forth in claim 1, further comprising the step of determining by said call treatment application whether said incoming call is to be selectively transferred based on at least a portion of said parametric information associated therewith.

16. A call notification system for use in a multimedia-capable network, comprising:
means for invoking a multimedia session engine to launch a call treatment application for a subscriber with respect to an incoming call initiated by a calling party;
database means operable to store a call notification profile associated with said subscriber;
service logic means associated with said call treatment application for determining a particular call alert mode to be provided with respect to said incoming call by interacting with said database means based on at least a portion of parametric information relating to said incoming call; and
means for actuating at least a portion of a multimedia interface operable with said subscriber's terminal for effectuating said particular call alert mode.

17. The call notification system for use in a multimedia-capable network as set forth in claim 16, wherein said particular call alert mode comprises providing at least one of a special tone, a special ringing, an announcement and a graphic window on a display screen associated with said multimedia interface.

18. The call notification system for use in a multimedia-capable network as set forth in claim 17, wherein said graphic window comprises at least one of a banner, an image and a pop-up window.

19. The call notification system for use in a multimedia-capable network as set forth in claim 16, wherein said particular call alert mode is operable to categorize said incoming call based on identifying a specific recipient party.

20. The call notification system for use in a multimedia-capable network as set forth in claim 19, wherein said specific recipient party comprises a secondary subscriber party associated with said subscriber.

21. The call notification system for use in a multimedia-capable network as set forth in claim 16, wherein said particular call alert mode is operable to categorize said incoming call based on an originating address associated with said calling party.

22. The call notification system for use in a multimedia-capable network as set forth in claim 21, wherein said particular call alert mode is operable to categorize said incoming call based on whether said originating address belongs to a select calling party list specified for the subscriber.

23. The call notification system for use in a multimedia-capable network as set forth in claim 16, further comprising means for selectively forwarding said incoming call to another destination based on at least a portion of said parametric information associated therewith.

24. The call notification system for use in a multimedia-capable network as set forth in claim 16, further comprising means for selectively accepting said incoming call based on at least a portion of said parametric information associated therewith.

25. The call notification system for use in a multimedia-capable network as set forth in claim 16, further comprising means for selectively rejecting said incoming call based on at least a portion of said parametric information associated therewith.

26. The call notification system for use in a multimedia-capable network as set forth in claim 16, further comprising means for selectively transferring said incoming call based on at least a portion of said parametric information associated therewith.

27. A computer-accessible medium operable with a network element disposed in a multimedia-capable next-generation network, said computer-accessible medium carrying a sequence of instructions which, when executed by at least one processing entity associated with said multimedia-capable next-generation network, cause the following steps to be performed:
upon receiving an incoming call from a calling party at a node serving a subscriber, invoking a multimedia session engine to launch a call treatment application for said subscriber;
based on at least a portion of parametric information relating to said incoming call, querying a call notification profile assooiated with said subscriber;
responsive to said step of querying, determining by said call treatment application a particular call alert mode to be provided with respect to said incoming call; and
actuating at least a portion of a multimedia interface operable with said subscriber's terminal for effectuating said particular call alert mode.

28. The computer-accessible medium operable with a network element disposed in a multimedia-capable next-generation network as set forth in claim 27, wherein said particular call alert mode comprises providing at least one of a special tone, a special ringing, an announcement and a graphic window on a display screen associated with said multimedia interface.

29. The computer-accessible medium operable with a network element disposed in a multimedia-capable next-generation network as set forth in claim 28, wherein said graphic window comprises at least one of a banner, an image and a pop-up window.

30. The computer-accessible medium operable with a network element disposed in a multimedia-capable next-generation network as set forth in claim 27, wherein said particular call alert mode is operable to categorize said incoming call based on identifying a specific recipient party.

31. The computer-accessible medium operable with a network element disposed in a multimedia-capable next-generation network as set forth in claim 30, wherein said specific recipient party comprises a secondary subscriber party associated with said subscriber.

32. The computer-accessible medium operable with a network element disposed in a multimedia-capable next-generation network as set forth in claim 27, wherein said particular call alert mode is operable to categorize said incoming call based on an originating address associated with said calling party.

33. The computer-accessible medium operable with a network element disposed in a multimedia-capable next-generation network as set forth in claim 32, wherein said particular call alert mode is operable to categorize said incoming call based on whether said originating address belongs to a select list specified for the subscriber.

34. The computer-accessible medium operable with a network element disposed in a multimedia-capable next-generation network as set forth in claim 27, further comprising another sequence of instructions for selectively forwarding said incoming call to a destination based on at least a portion of said parametric information associated therewith.

35. The computer-accessible medium operable with a network element disposed in a multimedia-capable next-generation network as set forth in claim 27, further comprising another sequence of instructions for selectively accepting said incoming call based on at least a portion of said parametric information associated therewith.

36. The computer-accessible medium operable with a network element disposed in a multimedia-capable next-generation network as set forth in claim 27, further comprising another sequence of instructions for selectively rejecting said incoming call based on at least a portion of said parametric information associated therewith.
